# EUROPEAN PATENT APPLICATION

(11) **EP 1 564 567 A1**
(43) Date of publication of application: **17.08.2005**
(21) Application number: 04256358.5
(22) Date of filing: 15.10.2004
(51) Int. Cl.: G02B 6/00, B60Q 1/00, F21S 8/10, B60R 1/12

(54) **Lighting system for vehicles**

(30) Priority: 10.02.2004 JP 2004033329
(71) Applicant: Murakami Corporation, Shizuoka-shi, Shizuoka, 422-8569 (JP)
(72) Inventor: Matsuura, Masaaki, Fujieda-shi Shizuoka (JP)
(74) Representative: Piésold, Alexander J.

(57) **Abstract**

Disclosed is a lighting system for vehicles which is able to be easily installed in an extremely small space, to be easily maintained, and to conserve its power consumption. The lighting system includes a light source placed inside a vehicle, and an optical fiber. This optical fiber has two ends, and light from the light source enters one end, whereas the light is sent out from the other end to irradiate any given area. Thanks to the optical fiber, the light source can be placed away from an area to be irradiated.

## Description

A system consistent with the present invention relates to a lighting system used in a vehicle.

At present, some door mirrors attached on front doors of a vehicle are equipped with a lighting system which irradiates a lower area around the mirrors themselves. Thanks to this lighting system, when a driver and passengers get in and out of the vehicle, they can confirm conditions around their feet, for example, whether there are obstacles, boggy grounds, puddles or the like, even at night or in the dark, (refer to Japanese Unexamined Patent Application Publication No. 11-105621 (paragraph 0013, Fig. 1)).

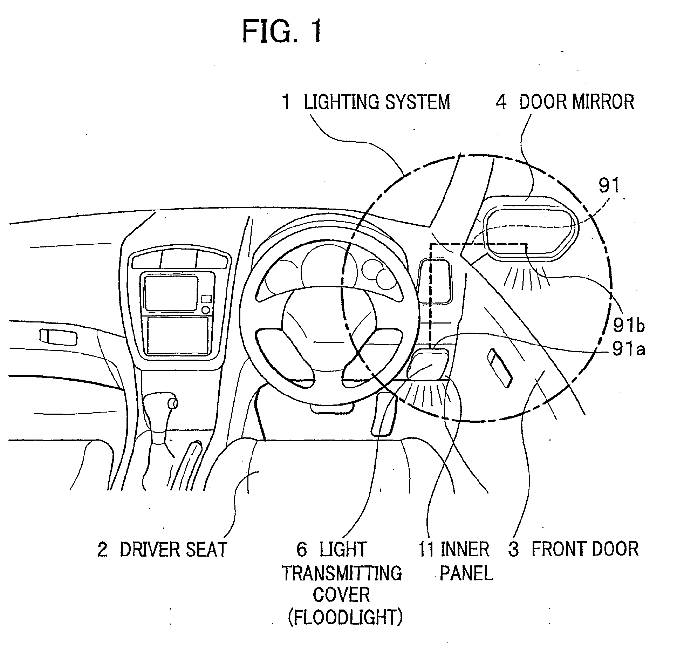

In addition, some door mirrors are equipped with an auxiliary turn signal unit. By use of this unit, a driver of a vehicle can surely indicate his or her intention to other vehicles or pedestrians even if they are positioned where they are hard to view primary turn signals of the vehicle, or at a blind spot of the turn signals (refer to Japanese Unexamined Utility Model Publication No.5-93982 (paragraphs 0007 and 0008, Fig. 1)).

However, since a door mirror includes a motor that adjusts the door mirror itself and other components within, an extra space inside the door mirror is limited. It is accordingly difficult to place a light source, such as a bulb or a light emitting diode (LED), inside a door mirror. In addition, a door mirror is basically not designed to include such a light source within, and it thus restricts any work involving disassembly of the door mirror, such as an exchange of a light source upon breakage, or maintenance of a lighting device for the light source. Furthermore, a door mirror must be fully waterproofed if incorporating a light source within. This is because a door mirror is always exposed to the external environment, so that the light source within is prone to be damaged by external moisture, etc. Additionally, by adding a light source to the door mirror, the power consumption may be unnecessarily increased.

Note that such disadvantages are not caused only in door mirrors, but apply to any case where a lighting system is installed in a limited space.

In consideration of the above disadvantages, the present invention has been made. An object of the present invention is to provide a lighting system for vehicles which is able to be easily installed in an extremely small space, to be easily maintained, and to conserve its power consumption.

It is a first aspect of the present invention to provide a lighting system used in a vehicle, which includes:
(a) a light source placed inside the vehicle; and
(b) a light guiding member having two ends, one of which light from the light source enters, and from the other of which the light is sent out, the other end being placed inside or outside the vehicle.

According to the first aspect, any given area inside or outside a vehicle is irradiated by the light source and the light guiding member which are both provided inside the vehicle. Thanks to this light guiding member, the light source does not need to be placed near an area to be irradiated, so that the lighting system can be easily installed even in a small space. Moreover, since the light source is not placed outside the vehicle, but placed within, an exchange and maintenance of the light source are made easier, and waterproofing becomes unnecessary. Furthermore, a light source for a standard interior light can be used as the light source of this system, and an excess increase in the power consumption can thereby be avoided.

It is a second aspect of the present invention to provide a lighting system used in a vehicle, which includes, in addition to the light source and the light guiding member, a floodlight which allows light from the light source to pass therethrough, and which is placed on an inner side of the vehicle relative to the light source.

According to the second aspect, the light source can directly irradiate an area inside the vehicle through the floodlight, as well as any other given area inside or outside the vehicle through the light guiding member. In other words, the single light source can irradiate multiple areas. This makes it possible to conserve the power consumption, and to decrease the number of components, thereby reducing the costs and simplifying the design, in comparison with the case where multiple light sources irradiate different areas.

It is a third aspect of the present invention to provide a lighting system used in a vehicle, which includes, in addition to the light source and the light guiding member,:
(a) a floodlight which allows light from the light source to pass therethrough, and which is placed adjacent to the light source; and
(b) a pair of shutters, one of which is located between the light source and the floodlight, and the other of which is located between the light source and the end of the light guiding member. The shutters are capable of being opened and closed, and one of the shutters is opened when the other is closed.

According to the third aspect, the light source can directly irradiate any given area through the floodlight, as well as any other given area inside or outside the vehicle through the light guiding member. In other words, the single light source can irradiate multiple areas. This makes it possible to conserve the power consumption, and to decrease the number of components, thereby reducing the costs and simplifying the design, in comparison with the case where multiple light sources irradiate different areas. Furthermore, when the shutter on the side of the light guiding member is opened, the shutter on the side of the light source is closed. In this case, the area around the floodlight is not irradiated, but the area around the other end of the light guiding member is irradiated. This means that multiple areas are not irradiated at the same time, but a specific area is irradiated alone.

It is a fourth aspect of the present invention is to provide a lighting system used in a vehicle, which includes the light source, the light guiding member, the floodlight and the shutters, wherein the floodlight and the one end of the light guiding member are positioned facing each other across the light source, and each of the shutters has two surfaces, one of which is made of a reflecting plate, which faces the light source.

According to the fourth aspect, when the shutter on the side of the light guiding member is opened, the shutter on the side of the floodlight is closed. In this case, light directed from the light source to the shutter on the side of the floodlight is reflected off the reflecting plate, and enters the end of the light guiding member together with light that directly enters it. With these shutters, a specific area can be irradiated alone, thus enhancing the irradiance on this area.

It is a fifth aspect of the present invention to provide a lighting system used in a vehicle, which includes the light source, the light guiding member, the floodlight and the shutters, wherein open/close movements of each of the shutters are related to open/close movements of a door of the vehicle.

According to the fifth aspect, the shutters are opened/closed in relation to the open/close movements of the door, whereby any given area can be efficiently irradiated. For example, when the front door is opened in order for a driver to get off the vehicle, if the shutter on the side of the floodlight is opened and the shutter on the side of the light guiding member is closed, then an area around the driver can be irradiated.

Note that the lighting system of the present invention is not applied only to a front door of a vehicle, but can be applied to any type of doors of vehicles, including rear doors, front hatches, rear hatches, hinged doors and slide doors.

It is a sixth aspect of the present invention to provide a lighting system used in a vehicle, which includes the light source and the light guiding member, wherein the other end of the light guiding member is routed to an interior of the door mirror.

According to the sixth aspect, since the light source does not need to be placed inside the door mirror, the lighting system can be easily installed even in a small space, and any given area can be thereby irradiated. Furthermore, the light source can be exchanged or maintained without involving disassembly of the door mirror.

It is a seventh aspect of the present invention to provide a lighting system used in a vehicle, which includes, in addition to the light source and the light guiding member, a floodlight which allows light from the light source to pass therethrough, and which is placed inside the vehicle so as to face a door of the vehicle when the door is closed. One end of the light guiding member is positioned on an inner side of the door so as to face the floodlight when the door is closed.

According to the seventh aspect, when the door is closed, light from the light source enters the end of the light guiding member through the floodlight, and is sent out from the other end. Meanwhile, when the front door is opened, the light from the light source radiates from the floodlight.

Preferred embodiments of the present invention will now be described by way of example only, and with reference to the accompanying drawings in which:
Fig. 1 is a perspective view depicting an interior of a vehicle where a lighting system according to a first embodiment of the present invention is installed;
Fig. 2 is a perspective view depicting the lighting system according to the first embodiment;
Fig. 3A is a plan view showing open/close movements of the lighting system according to the first embodiment when a front door of the vehicle is closed;
Fig. 3B is a plan view showing the open/close movements of the lighting system according to the first embodiment when the front door is opened;
Fig. 4 is a flow chart showing a mode of switching areas to be irradiated
Fig. 5A is a plan view of a lighting system according to a second embodiment of the present invention when the front door is closed; and
Fig. 5B is a plan view of the lighting system according to the second embodiment when the front door is opened.

First and second embodiments of the present invention will be described below in detail.

### [First Embodiment]

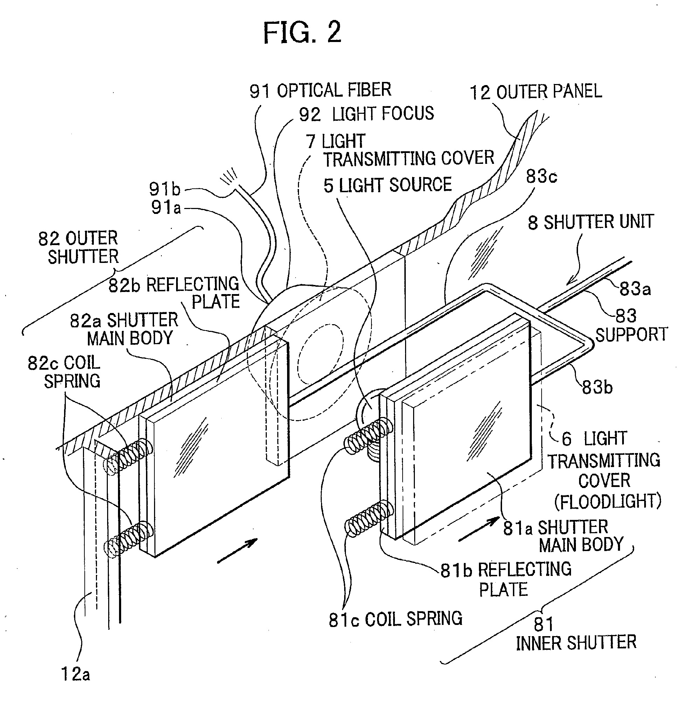

Fig. 1 is a perspective view depicting an interior of a vehicle where a lighting system according to the first embodiment is installed; and Fig. 2 is a perspective view depicting the lighting system itself. In Fig. 2, an inner panel 11 (see Fig. 1) is omitted for easy understanding.

A lighting system 1 according to the first embodiment serves as both in-vehicle and out-vehicle lighting systems. Specifically, the in-vehicle lighting system irradiates, from the inner panel 11 near a driver seat 2, an area around feet of a driver, and the out-vehicle lighting system irradiates, from an interior of a door mirror 4 on a front door 3, an area on a road below the door mirror 4.

Specifically, as shown in Fig. 2, the lighting system 1 includes a light source 5, such as one or more incandescent bulbs or LEDs, a light transmitting cover (floodlight) 6 placed on the driver's side relative to the light source 5 (thereinafter, referred to as "inner side"), a light transmitting cover 7 placed on the side opposite to the light transmitting cover 6 relative to the light source 5 (thereinafter, referred to as "outer side"), an optical fiber (light guiding member) 91, and a shutter unit 8 that moves in relation to open/close movements of the front door 3. The lighting system 1 can irradiate an area below the driver seat 2 by allowing light from the light source 5 to pass through the light transmitting cover 6. Further, the lighting system 1 can also irradiate an area on a road below the door mirror 4 by allowing light from the light source 5 to pass through the light transmitting cover 7 and by leading the light to the interior of the door mirror 4 through the optical fiber 91. In this case, the shutter unit 8 switches areas to be irradiated so that either the area below the driver seat 2 or the area on a road is irradiated.

The light transmitting cover 6 is made of, for example, a light transmitting material such as a translucent synthetic resin, and is detachably attached to an aperture (not shown) on the inner panel 11 below a steering wheel at the driver seat 2. The light source 5 is placed between the inner panel 11 that directly faces the driver seat 2 and an outer panel 12 that is located on the outer side of the inner panel 11, and light from the light source 5 passes through the light transmitting cover 6 to thereby irradiate the interior of the vehicle. On the outer panel 12, the light transmitting cover 7 is attached such that it faces the light transmitting cover 6 across the light source 5.

On the outer side of the light transmitting cover 7, a light focus 92 and one end 91a of the optical fiber 91 are arranged, and the other end 91b thereof is routed to the interior of the door mirror 4 and is fixed there (see Fig. 1).

The light focus 92 uses its lens effect to focus light from the light source 5 which has passed through the light transmitting cover 7, and enters the focused light into the end 91a of the optical fiber 91. Subsequently, the light is led from the end 91a to the interior of the door mirror 4 through the optical fiber 91, and is then sent out from the other end 91b. Consequently, the lighting system 1 can irradiate the area below the door mirror 4.

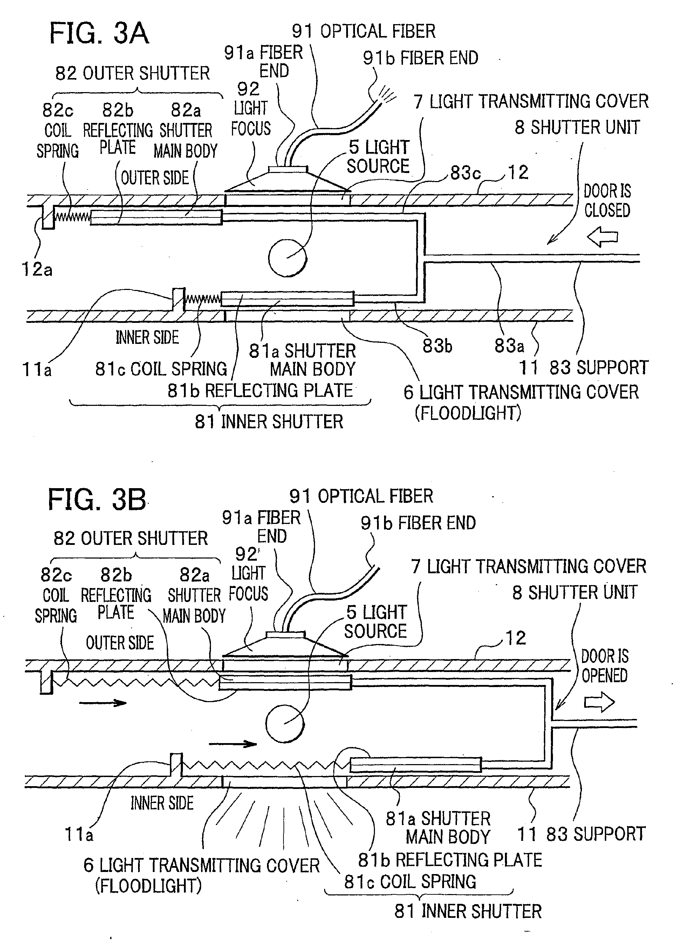

Figs. 3A and 3B are plan views showing open/close movements of the shutter unit 8. Specifically, Fig. 3A is a plan view of the lighting system when the front door 3 is closed; and Fig. 3B is a plan view of the lighting system when the front door 3 is opened.

The shutter unit 8 is positioned between the inner and outer panels 11 and 12, as shown in Figs 3A and 3B, and includes inner and outer shutters 81 and 82, and a support 83. In addition, the inner shutter 81 is placed between the light source 5 and the inner panel 11, and moves along the inner panel 11. Meanwhile, the outer shutter 82 is placed between the light source 5 and the outer panel 12, and moves along the outer panel 12. The support 83 supports the inner and outer shutters 81 and 82 in their moving direction.

The inner shutter 81 is constituted of a shutter main body 81a, a reflecting plate 81b and a coil spring 81c. In addition, the shutter main body 81a is made of a plate-shaped member, and has substantially the same shape as that of the light transmitting cover 6. The reflecting plate 81b is provided on a surface of the shutter main body 81a, which faces the light source 5. The coil spring 81c has both ends fixed to the shutter main body 81a and to a fixed portion 11a of the inner panel 11, respectively, and biases the shutter main body 81a toward the front door 3 (right direction in the figure). When the shutter main body 81a is located in front of the light transmitting cover 6 (see Fig. 3A), light from the light source 5 is reflected off the reflecting plate 81b, enters the end 91a of the optical fiber 91 through the light transmitting cover 7, and is sent out from the other end 91b. In this case, the shutter main body 81a and the reflecting plate 81b may be a single member.

The outer shutter 82 includes a shutter main body 82a, a reflecting plate 82b, and a coil spring 82c. In addition, the shutter main body 82a is made of a plate-shaped member having substantially the same shape as that of the light transmitting cover 7. The reflecting plate 82b is provided on a surface of the shutter main body 82a, which faces the light source 5. The coil spring 82c has both ends fixed to the shutter main body 82a and to a fixed portion 12a of the outer panel 12, respectively, and biases the shutter main body 82a toward the front door 3. When the shutter main body 82a is located in front of the light transmitting cover 6 (see Fig. 3B), light from the light source 5 is reflected off the reflecting plate 82b, and radiates toward the interior of the vehicle through the light transmitting cover 6.

The support 83 includes a main support 83a, and first and second supports 83b and 83c branched off from the main support 83a, and first and second supports 83b and 83c support the inner and outer shutters 81 and 82, respectively. The main support 83a is coupled to the front door 3 (see Fig. 1), and moves in the horizontal direction in relation to the open/close movements of the front door 3. The reason why the first and second supports 83b and 83c have lengths different from each other is for supporting the inner and outer shutters 81 and 82 so as not to be aligned. For this reason, for example, when the inner shutter 81 is aligned with the light transmitting cover 6 with respect to the light source 5, the outer shutter 82 is not aligned with the light transmitting cover 7 with respect thereto, as shown in Fig. 3A.

Hereinafter, "'close state" means a state where the individual shutters are located in front of the corresponding covers, whereas "open state" means a state where the shutters are not located there. As shown in Fig. 3A, when the front door 3 is closed, the main support 83a is kept pushed by the front door 3, so that the inner shutter 81 is in the close state. Meanwhile, as shown in Fig. 3B, when the front door 3 is opened, the coil springs 81c and 82c bias the shutter main bodies 81a and 82a toward the front door 3, and the shutter main bodies 81a and 82a hence move so that the inner shutter 81 is in the open state and the outer shutter 82 is in the close state.

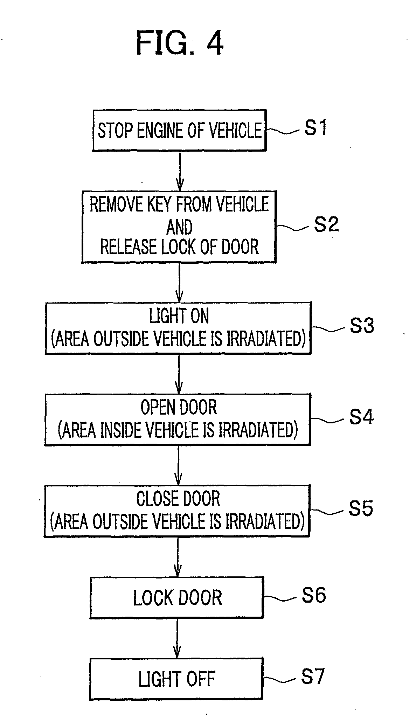

A description will be given below of a mode where the areas to be irradiated are switched, with reference to Fig. 4.

Fig. 4 is a flow chart showing the mode of switching the areas to be irradiated.

First, a driver parks a vehicle equipped with the lighting system 1 according to the first embodiment and, then stops an engine of the vehicle (S1). Subsequently, the driver removes an ignition key from the vehicle and, then releases a lock of the front door 3 (see Fig. 1) (S2), so that the light source 5 is turned on (S3). In this state, the front door 3 stays closed, in other words, the inner shutter 81 is in the close state, while the outer shutter 82 is in the open state (see Fig. 3A) . Therefore, light from the light source 5 enters the optical fiber 91 and radiates an area below the door mirror 4 outside the vehicle. Next, the driver opens the front door 3 in order to get off the vehicle (S4) . At this moment, the inner shutter 81 assumes in the open state, and the outer shutter 82 assumes in the close state (see Fig. 3B), so that an area to be irradiated is switched from the area outside the vehicle to an area around the feet of the driver inside the vehicle. Note that, since the front door 3 stays opened in this state, an area on the road nearby the driver seat 2 outside the vehicle is also irradiated. The driver can accordingly confirm conditions around his or her feet to thereby safely get off the vehicle.

Continuously, the driver gets off the vehicle and, then closes the front door 3 (S5). At this moment, the inner shutter 81 assumes in the close state, and the outer shutter 82 assumes in the open state, so that an area to be irradiated is switched again from the area inside the vehicle to an area on a road below the door mirror 4. The driver locks the front door 3 (S6), and the light source 5 is then turned off (S7). In this way, even after the front door 3 is closed, the area outside the vehicle is irradiated until the driver locks the front door 3. The driver can therefore confirm safe conditions around his or her feet even after getting off the vehicle.

According to the above-described first embodiment of the lighting system 1, following effects can be achieved.
(1) Since the door mirror 4 includes the end 91b of the optical fiber 91 within instead of the light source 5, it is possible to install the lighting system in a vehicle without occupying a large space inside the door mirror 4.
(2) It is possible to secure spaces for other components inside the door mirror 4, such as cameras and antennas.
(3) Since the single light source 5 irradiates both areas inside and outside the vehicle, it is possible to conserve the consumption power, as well as to decrease the number of components, thereby reducing the costs and simplifying the design, in comparison with a case where multiple light sources are used.
(4) Since the light source 5 is not placed outside the vehicle, but placed within, it is easy to exchange and maintain the light source 5, as well as to eliminate the need for the severe waterproofing.
(5) Since the shutter unit 8 moves in relation to the open/close movements of the front door 3, it is possible to irradiate only a specific area, and therefore, to enhance the irradiance on the specific area.

Note that the lighting system according to the present invention is not limited to the above-described first embodiment, and variations and modifications may be made as appropriate without departing from the technical spirit of the present invention.

For example, in the first embodiment, the optical fiber 91 that is routed from the light source 5 to the interior of the door mirror 4 is employed, so that the irradiation at two areas by the light source 5 is achieved. However, multiple optical fibers routed to respective areas are employed, so that irradiation at more than two areas may be achieved. In addition, the optical fiber 91 that leads the light to any area (s) may include a single optical fiber and a bundle of optical fibers.

In the first embodiment, the light source 5 is adapted to irradiate an area below the door mirror 4. However, alternatively the light source 5 may be adapted to irradiate, for example, an area around a front bumper, a rear bumper, a rear hatch or a key hole on the front door, or an area inside the vehicle, such as an area around a cup holder or a steering wheel.

In the first embodiment, a light for irradiating an area below the driver seat 2 is used as the light source 5, but alternatively light from turn signals may be led to the door mirrors 4, thus configuring auxiliary turn signals on the door mirrors 4.

In the first embodiment, the shutter unit 8 switches areas to be irradiated, but alternatively by omitting the shutter unit 8, multiple areas may be irradiated at the same time.

Furthermore, in the first embodiment, the shutter unit 8 is coupled to the front door 3, so that the shutter unit 8 can moves in relation to the open/close movements of the front door 3, but alternatively a controller that behaves in accordance with the flow chart of Fig. 4 is employed, thereby electrically opening/closing the shutter unit 8 through a motor or a linear slide.

In the first embodiment, the OFF operation of the light source 5 is carried out in relation to the lock of the front door 3 or the release thereof. However, alternatively the OFF operation may be controlled by a timer.

### [Second Embodiment]

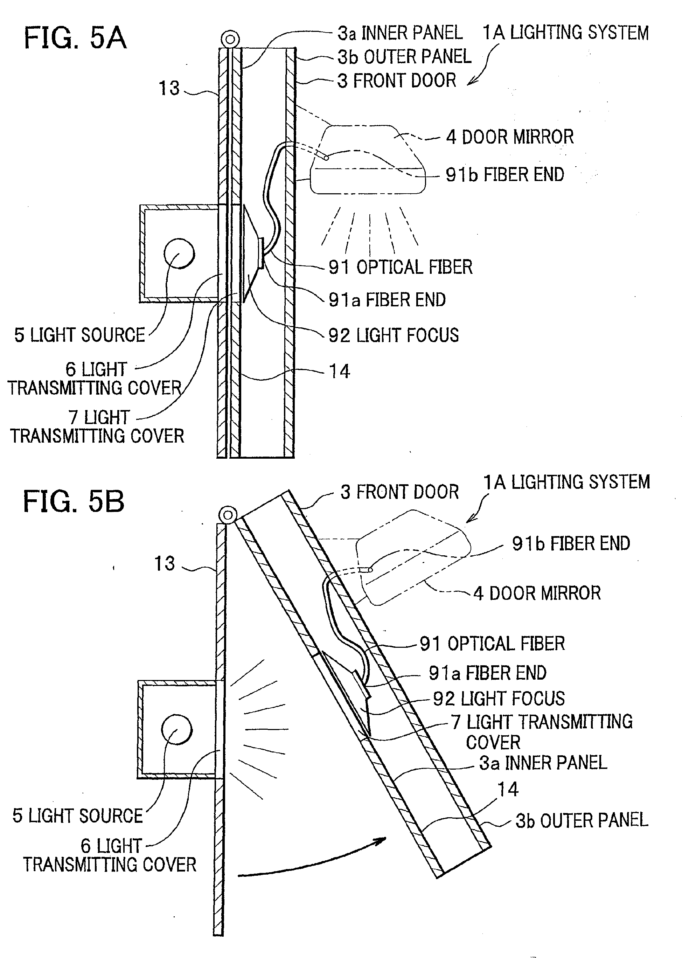

A lighting system according to the second embodiment of the present invention will be described below with reference to Figs. 5A and 5B. Figs. 5A and 5B are plan views depicting the lighting system according to the second embodiment. Specifically, Fig. 5A is a plan view of the lighting system when the front door 3 is closed; and Fig. 5B is a plan view of the lighting system when the front door 3 is opened. Note that, since the lighting system of the second embodiment differs from that of the first embodiment in that the arrangement of some components is modified, the same reference numerals are given to the same parts as those already described in the first embodiment, and duplicate description therefor is omitted.

A lighting system 1A according to the second embodiment serves as both out-vehicle and in-vehicle lighting systems. Specifically, the out-vehicle lighting system irradiates, from the interior of the door mirror 4, an area on a road below the door mirror 4 (Fig. 5A), and the in-vehicle lighting system emits light in the direction from the interior of the vehicle toward the front door 3 (Fig. 5B).

Specifically, when the front door 3 is closed, the lighting system 1A can irradiate an area below the door mirror 4 by allowing light from the light source 5, such as one or more incandescent bulbs or LEDs, to pass through the light transmitting covers 6 and 7 and by leading the light to the interior of the door mirror 4 through the optical fiber (light guiding member) 91, as shown in Fig. 5A. Meanwhile, when the front door 3 is opened, the lighting system 1A can irradiate an area on the road nearby the driver seat 2 outside the vehicle in the direction from the interior of the vehicle toward the front door 3 by allowing light from the light source 5 to pass through the light transmitting cover 6, as shown in Fig. 5B. Incidentally, it is preferable that the light source 5 is surrounded by a reflecting plate in order to enhance the efficiency of irradiation of the light source 5.

In the second embodiment, when the front door 3 is closed, the light source 5 is placed inside a panel 13 being in contact with the front door 3, and the light transmitting cover 6 is detachably attached to panel 13, as shown in Fig. 5A. The light transmitting cover 7 is provided on an inner panel 3a of the front door 3, while being aligned with the light transmitting cover 6. The light focus 92 to which the end 91a of the optical fiber 91 is connected is located between the inner and outer panels 3a and 3b (that is, inside the front door 3) so as to be aligned with the light transmitting cover 7. The end 91b of the optical fiber 91 is then routed to the interior of the door mirror 4.

In the above-described lighting system 1A, as shown in Fig. 5A, when the front door 3 is closed, light from the light source 5 enters the end 91a of the optical fiber 91 through the light transmitting covers 6 and 7 and light focus 92. The light is then led to the end 91b, and is sent out therefrom. As a result, an area on a road below the door mirror 4 is irradiated. Meanwhile, as shown in Fig. 5B, when the front door 3 is opened, light from the light source 5 passes through the light transmitting cover 6, and as a result, an area on the road nearby the driver seat 2 outside the vehicle is irradiated. Note that, when the front door 3 is opened, light from the light source 5 that has pass through the light transmitting cover 6 does not enter the optical fiber 91, and the area below the door mirror 4 is therefore not irradiated. This is because the light transmitting cover 7 on the front door 3 is away from the light source 5 and the light transmitting cover 6.

According to the above-described lighting system according to the second embodiment, following effects can be achieved.
(1) It is possible to switch areas to be irradiated without a complex shutter mechanism as in the first embodiment.
(2) Since the door mirror 4 includes the end 91b of the optical fiber 91 within instead of the light source 5, it is possible to install the lighting system in the vehicle without occupying a large area inside the door mirror 4.
(3) It is possible to secure spaces for other components inside the door mirror 4, such as cameras and antennas.
(4) Since the single light source 5 irradiates both areas inside and outside the vehicle, it is possible to conserve the consumption power, to decrease the number of components, thereby reducing the costs and simplifying the design, in comparison with a case where multiple light sources are used.
(5) Since the light source 5 is not placed outside the vehicle, but placed within, it is easy to exchange and maintain the light source 5, as well as to eliminate the need for the severe waterproofing.

Note that the lighting system according to the present invention is not limited to the above-described second embodiment, and variations and modifications may be made as appropriate without departing from the scope of the present invention, as defined by the claims.

For example, in the second embodiment, a solar cell that charges a capacitor, a secondary cell or the like may be placed near the end 91a or 91b of the optical fiber 91. Furthermore, if the light from the light source 5 is modulated, then a signal can be transmitted between the light source 5 and the solar cell.

## Claims

1. A lighting system used in a vehicle, the lighting system comprising,
a light source being placed inside the vehicle; and
a light guiding member having two ends, one end of which light from the light source enters, and from the other end of which the light is sent out, the other end being placed in one of an interior and an exterior of the vehicle.

2. A lighting system according to claim 1, further comprising a floodlight for allowing light from the light source to pass therethrough, the floodlight being placed on an inner side of the vehicle relative to the light source.

3. A lighting system according to claim 1 or 2, further comprising:
a floodlight for allowing light from the light source to pass therethrough, the floodlight being placed adjacent to the light source; and
a pair of shutters, one of which is located between the light source and the floodlight, and the other of which is located between the light source and the one end of the light guiding member, the shutters capable of being opened and closed, wherein one of the shutters is opened when the other is closed.

4. A lighting system according to claim 3,
wherein the floodlight and the one end of the light guiding member are positioned facing each other across the light source, and
wherein each of the shutters has two surfaces, one of which is made of a reflecting plate, which faces the light source.

5. A lighting system according to claim 3 or 4,
wherein open and close movements of each of the shutters are related to open and close movements of a door of the vehicle.

6. A lighting system according to any preceding claim,
wherein the other end of the light guiding member is routed to an interior of a door mirror of the vehicle.

7. A lighting system according to any preceding claim, further comprising a floodlight for allowing light from the light source to pass therethrough, the floodlight being placed inside the vehicle so as to face a door of the vehicle when the door is closed,
wherein the one end of the light guiding member is positioned on an inner side of the door so as to face the floodlight when the door is closed.
